# EUROPÄISCHE PATENTSCHRIFT

(11) **EP 2 835 957 B1**
(45) Veröffentlichungstag und Bekanntmachung des Hinweises auf die Patenterteilung: **25.10.2017**
(21) Anmeldenummer: 14001983.7
(22) Anmeldetag: 06.06.2014
(51) Int. Cl.: H04M 1/03, H04M 1/04, H04R 1/28, H04B 1/3822, B60R 11/02, H04M 1/725

(54) **Halterung zur Aufnahme eines durch einen Lautsprecher Geräusche abgebenden Gerätes, z. B. eins Handys oder eines Smartphones**
Holder for holding a device issuing sounds from a loudspeaker, e.g. a mobile phone or a smartphone
Support de réception d'un appareil émettant des sons par un haut-parleur, par exemple un téléphone portable ou un téléphone intelligent

(30) Priorität: 06.08.2013 DE 202013007023 U
(43) Veröffentlichungstag der Anmeldung: 11.02.2015
(73) Patentinhaber: Noorzaie, Sohrab, 34125 Kassel (DE); Noorzaie, Khesrau, 34125 Kassel (DE)
(72) Erfinder: Noorzaie, Sohrab, 34125 Kassel (DE); Noorzaie, Khesrau, 34125 Kassel (DE)
(74) Vertreter: Patentanwälte Walther Hinz Bayer PartGmbB

(56) Entgegenhaltungen:
- WO-A1-2012/149304
- WO-A1-2013/126216
- WO-A1-2014/147410

## Beschreibung

Die Erfindung betrifft eine Halterung zur Aufnahme eines durch einen Lautsprecher Geräusche, z. B. Musik abgebenden Gerätes, z. B. eines Handys oder eines Smartphones.

Handys sind als tragbare elektronische Geräte durchaus in der Lage auch Musik abzuspielen. Allerdings sind die Akkus derartiger Handys, insbesondere wenn es sich um sogenannte Smartphones handelt, stark belastet, sodass diese bereits nach relativ kurzer Zeit entladen sind. Dies gilt umso mehr, wenn dauerhaft über den am Handy befindlichen Lautsprecher für die unmittelbare Umgebung hörbar Musik abgespielt wird.

In anderen Anwendungsfällen sind die am Smartphone befindlichen Lautsprecher zu schwach, um Sprache oder Musik in ausreichender Lautstärke bereitzustellen. Für diese Fälle gibt es externe Lautsprecher bzw. externe Verstärker, die an das Smartphone angeschlossen werden können.

Die der Erfindung zugrunde liegende Aufgabe besteht demzufolge darin eine Einrichtung der eingangs genannten Art bereitzustellen, um über das elektronische Gerät abgebende Töne für den Empfänger besser hörbar zu machen, um Akkuleistung einzusparen oder zusätzliche Verstärker entbehrlich zu machen.

WO 2012/149304 A1 offenbart eine Schutzhülle für ein Mobilgerät mit Kanälen auf der Rückseite, die Töne des Lautsprechers des Mobilgeräts nach außen leiten. WO 2013/126216 A1 offenbart eine Schutzhülle für ein Mobilgerät mit einer aus- und ein-klappbaren Erweiterung auf der Rückseite, welche die Töne des Lautsprechers des Mobilgeräts akustisch verstärkt.

Zur Lösung der Aufgabe wird erfindungsgemäß eine Halterung entsprechend des unabhängigen Anspruchs 1 vorgeschlagen, die als Lautsprecherschale zur rückseitigen Anordnung an dem Geräusche abgebenden Gerät ausgebildet ist, wobei die Lautsprecherschale seitlich über die Außenkontur des Geräts übersteht, wobei die Lautsprecherschale das Gerät schräg einliegend aufnimmt. Das Gerät soll hierbei insbesondere über seine Länge schräg einliegend in der Lautsprecherschale anordbar sein.

Ein solcher externer Lautsprecher, der rein mechanisch, also nicht elektrisch oder elektronisch, eine Verstärkung des von dem Gerät abgesonderten Schalls bewirkt, ist effektiv und benötigt keine elektrische Energie. Die Verstärkung des Schalls, der durch den Lautsprecher des Geräts abgegeben wird, wird insbesondere dadurch erreicht, dass das Geräusche abgebende Gerät schräg in der Lautsprecherschale einliegt.

Das heißt, dass der Abstand des Gerätes zur rückseitigen Wandung der Lautsprecherschale über die Länge des Gerätes zunimmt. Es ergibt sich somit im Querschnitt über die Länge des Gerätes eine trichterförmige Gestalt zwischen dem Gerät und der Lautsprecherschale. Insbesondere ist in diesem Zusammenhang vorgesehen, dass der Abstand zur rückseitigen Wandung oder Rückseite der Lautsprecherschale im Bereich des Lautsprechers des Geräts geringer ist, als am gegenüberliegenden Ende des Geräts. Üblicherweise befindet sich der Lautsprecher am unteren Ende des Gerätes, sodass am unteren Ende des Gerätes der Abstand zur rückseitigen Wandung des Gerätes geringer ist, als am gegenüberliegenden Ende des Gerätes. Durch diese trichterförmige Gestalt erfolgt die Verstärkung des durch den Lautsprecher abgebenden Schalls. Um nunmehr den durch die Lautsprecherschale verstärkten Schall abzugeben, ist vorgesehen, dass der Rand der Lautsprecherschale einen Abstand zur Außenkontur des Gerätes aufweist. Dieser seitliche Abstand zwischen dem Rand der Lautsprecherschale und der seitlichen Außenkontur des Gerätes bildet somit die Abstrahlfläche für den Schall. Hierbei ist nicht erforderlich, dass der Abstand umlaufend vorgesehen ist. Weitere Merkmale und Ausgestaltungen zu der Erfindung ergeben sich aus den Ansprüchen. So ist insbesondere vorgesehen, dass die Schale jeweils endseitig einander gegenüberliegend Mittel zur Fixierung des Geräts in der Lautsprecherschale aufweist. Die Mittel zur Fixierung des Gerätes in der Lautsprecherschale sind hierbei derart, dass das Gerät stabil durch die Lautsprecherschale aufgenommen wird, mithin auch Erschütterungen nicht zum Herausfallen des Gerätes führen, wenn die Lautsprecherschale z. B. an einem Fahrrad befestigt ist.

Im Einzelnen ist in diesem Zusammenhang vorgesehen, dass das Mittel zur Fixierung des Geräts am ersten oberen Ende des Geräts einen in der Höhe über den Rand der Lautsprecherschale überstehenden Finger mit einer Anschlagplatte für das Gerät umfasst. Hieraus wird deutlich, dass das Gerät in diesem Bereich über den Rand der Lautsprecherschale überstehend in der Lautsprecherschale einliegt. Im Einzelnen zeigt der Finger mindestens zwei konisch auf die Anschlagplatte zulaufende Fingerstege, an deren oberen Ende die bereits zuvor erwähnte Anschlagplatte angeordnet ist.

Nach einem besonders vorteilhaften Merkmal der Erfindung ist vorgesehen, dass die Fingerstege in Richtung auf die Anschlagplatte eine stirnseitige Wölbung derart aufweisen, dass das Gerät, beispielsweise ein Handy oder ein Smartphone, bis in den Bereich der Anschlagplatte auf der Wölbung entlang gleitet, wobei die Anschlagplatte über die Stege in Richtung auf das gegenüberliegende Ende der Lautsprecherschale zu übersteht, sodass das Gerät sicher in der als Lautsprecherschale ausgebildeten Halterung einliegt.

Es wurde bereits darauf hingewiesen, dass die Lautsprecherschale an jedem Ende der Lautsprecherschale einander gegenüberliegend Mittel zur Fixierung des Geräts aufweist. Das Mittel zur Fixierung des Geräts am zweiten unteren Ende des Gerätes, d. h. im Bereich des Lautsprechers des Geräts, ist als Halteeinrichtung ausgebildet, die mindestens einen ersten und einen zweiten Fußsteg umfasst. Die beiden Fußstege verlaufen des Weiteren konisch auf die rückseitige Wandung der Lautsprecherschale zu. Die Halteeinrichtung umfasst hierbei mindestens zwei Fußplatten, die den Raum zwischen den Fußstegen und insbesondere dem Rand der Lautsprecherschale überdecken. Die Fußplatten verlaufen parallel zur Mittellängsachse unter Bildung eines Schlitzes beabstandet zueinander. Der Schlitz zwischen den beiden Fußplatten dient der Zuführung des Ladekabels für das Gerät. Insofern ist der Abstand zwischen dem ersten und zweiten Fußsteg derart, dass dieser etwa der Breite des Steckers des Ladekabels entspricht. Der Schlitz erstreckt sich nach einem besonders vorteilhaften Merkmal über den Randbereich der Lautsprecherschale bis nahe an die rückseitige Wandung, wobei hierdurch erreicht wird, dass im Falle des Eintritts von Wasser in die Lautsprecherschale, z. B. bei Regen, dieses Wassers durch den Schlitz, durch den das Ladekabel zugeführt wird, abfließen kann. Bei Regen kann das Handy oder Smartphone durch eine elastische Kunststoffhülle abgedeckt werden; die Bedienfunktion ist hierdurch nicht beeinträchtigt.

Es wurde bereits darauf hingewiesen, dass die Fingerstege in Richtung der Anschlagplatte jeweils stirnseitig eine Wölbung derart aufweisen, dass das Gerät an der stirnseitigen Wölbung entlang gleiten kann, bis es an der Anschlagplatte anliegt. Gleiches ist in Bezug auf die Fußstege vorgesehen. Das heißt, dass auch die beiden Fußstege in Richtung auf die Fußplatten jeweils eine stirnseitige Wölbung derart aufweisen, dass das Gerät an der stirnseitigen Wölbung entlang gleitet, bis es an der Unterseite der Fußplatten anliegt. Insofern stehen, genau wie die Anschlagplatte auch, die Fußplatten über die Fußstege in Richtung auf die Fingerstege des Fingers über.

Nach einem weiteren Merkmal der Erfindung ist, wie bereits ausgeführt, vorgesehen, dass der erste und der zweite Fußsteg auf die Rückseite der Lautsprecherschale konisch zulaufend ausgebildet sind, wobei neben dem ersten und dem zweiten Fußsteg jeweils unter Bildung eines Abstandes parallel dazu verlaufend jeweils eine Fußlamelle angeordnet ist. Der Abstand zwischen dem Fußsteg und der Fußlamelle entspricht hierbei in etwa der Breite des Lautsprechers des Gerätes, wobei in Verbindung mit der Wölbung der Lautsprecherschale im Bereich des Abstandes zwischen dem jeweiligen Fußsteg und der Fußlamelle die von dem Lautsprecher abgegeben Geräusche in Richtung auf das obere Ende der Lautsprecherschale zu abgestrahlt werden. Häufig ist es bei Handys oder Smartphones so, dass der Lautsprecher auf der einen Seite des Steckers für das Ladekabel und das Mikrofon auf der gegenüberliegenden Seite angeordnet ist. Es hat sich nun herausgestellt, dass der Raum der zwischen dem einen Fußsteg und der beabstandet dazu verlaufenden Fußlamelle, der durch die Fußplatte abgedeckt ist, dafür sorgt, dass Windgeräusche, wie sie entstehen, wenn eine solche Lautsprecherschale als Halterung für ein Handy auf einem Fahrrad fungiert, nicht oder vermindert zu dem Mikrofon gelangen, was bedeutet, dass die Kommunikation über den Mikrofon nur geringfügig gestört wird.

Als besonders vorteilhaft hat sich herausgestellt, wenn die Lautsprecherschale zwei geteilt ausgebildet ist, wobei die erste und die zweite Lautsprecherteilschale teleskopierbar miteinander in Verbindung stehen. Hierbei ist der Finger auf der einen Lautsprecherteilschale und die Halteeinrichtung an der anderen Lautsprecherteilschale angeordnet. Durch eine solche Gestaltung wird der Tatsache Rechnung getragen, dass die Handys und Smartphones unterschiedliche Größen aufweisen. Um nun dafür zu sorgen, dass das jeweilige Handy oder Smartphone unabhängig von seiner Größe sicher durch die Lautsprecherschale aufgenommen werden kann, ist vorgesehen, dass die Lautsprecherteilschalen Fixiermittel aufweisen, um das Handy oder Smartphone in den beiden Lautsprecherschalen fixiert zu halten. Das Fixiermittel umfasst hierbei mindestens ein Elastomerband, das die beiden Lautsprecherteilschalen umlaufend erfasst. Hieraus wird unmittelbar deutlich, dass die beiden Lautsprecherteilschalen gegen die Rückstellkraft des Elastomerbandes auseinandergezogen werden, um das Handy in die Lautsprecherschale einzulegen, wobei dann bei Loslassen einer Lautsprecherteilschale aufgrund des Elastomerbandes das Handy oder Smartphone sicher durch die Lautsprecherschale zwischen dem Finger und der Halteeinrichtung aufgenommen ist. In diesem Zusammenhang wird noch einmal darauf hingewiesen, dass sowohl die Fußstege der Halteeinrichtung als auch die Fingerstege des Fingers jeweils eine stirnseitige Wölbung aufweisen, die dafür sorgt, dass nach Einsetzen des Handys oder Smartphone in die Lautsprecherschale bei Zusammenfahren der beiden Lautsprecherteilschalen das Gerät an den Fingerstegen entlang bis an die Unterseite der Anschlagplatte gleitet, wobei das Handy oder Smartphone an den Fußstegen ebenfalls aufgrund der Federwirkung des Elastomerbandes und der Ausbildung der stirnseitigen Wölbung der Fußstege entlang gleitet, bis es an der Unterseite der Fußplatten anliegt.

Zur Fixierung des Elastomerbandes auf dem Umfang der beiden Lautsprecherteilschalen ist eine Führungsnut vorgesehen, in der das Elastomerband einliegt.

Es wurde bereits darauf hingewiesen, dass die beiden Lautsprecherteilschalen teleskopierbar miteinander in Verbindung stehen. Um eine Führung der Lautsprecherteilschalen ineinander zu ermöglichen, ist nach einem besonderen Merkmal der Erfindung vorgesehen, dass die beiden Lautsprecherteilschalen durch eine Nut- und Federverbindung geführt miteinander in Verbindung stehen.

Als weiterhin positiv in Bezug auf eine Verstärkung des Schalls hat sich herausgestellt, wenn die Lautsprecherschale insgesamt eine durchgehende Wölbung aufweist, d. h. sowohl in Längsrichtung als auch in Querrichtung bis in den Randbereich hinein gewölbt ausgebildet ist. Eine solche gewölbte Form der Lautsprecherschale sorgt nicht nur für eine Verstärkung des Schalls und eine Verbesserung des Sounds, sondern darüber hinaus kann hierdurch eine ergonomische Form erreicht werden, die eine leichte Bedienung des Handys oder Smartphones über die beiden Daumen, wenn das Gerät von beiden Händen aufgenommen wird, ermöglicht.

Es wurde bereits darauf hingewiesen, dass das Gerät bei Einsitzen in der Lautsprecherschale am oberen Ende durch die Anschlagplatte und am unteren Ende durch die beiden Fußplatten gehalten wird. Sowohl die Anschlagplatte als auch die Fußplatte überragen den Bildschirm des einsitzenden Geräts indes nur minimal, sodass die Bedienbarkeit des Gerätes nicht beeinträchtigt ist.

In Bezug auf die beiden Lautsprecherteilschalen hat sich als insbesondere vorteilhaft herausgestellt, wenn zumindest die obere Lautsprecherteilschale aus einem transparenten Kunststoff hergestellt ist, um die Funktion der Kamera beibehalten zu können.

Nach einem weiteren Merkmal der Erfindung ist vorgesehen, dass die Lautsprecherschale auf der Außenseite der rückseitigen Wandung einen Adapter aufweist, wobei der Adapter der Aufnahme eines Clips dient, wobei durch den Clips die Lautsprecherschale z. B. am Lenkrad eines Fahrrads befestigt werden kann. Der Adapter kann allerdings auch als Aufsteller für die Lautsprecherschale auf einer Unterlage, z. B. einem Tisch, dienen.

Anhand der Zeichnungen wird die Erfindung beispielhaft näher erläutert.
- Fig. 1: zeigt die Lautsprecherschale mit einsitzendem Handy in einer perspektivischen Darstellung in einer Draufsicht;
- Fig. 2: zeigt eine Seitenansicht gemäß der Linie II-II aus Fig. 1;
- Fig. 3: zeigt eine Darstellung gemäß Fig. 1 jedoch ohne einsitzendes Handy;

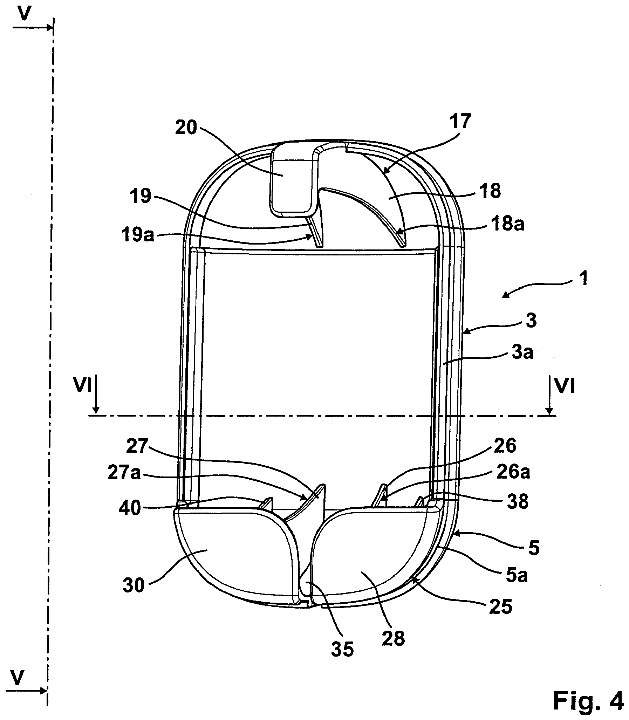

- Fig. 4: zeigt eine Darstellung gemäß Fig. 3, wobei die beiden Lautsprecherteilschalen in zusammengeschobenen Zustand dargestellt sind;

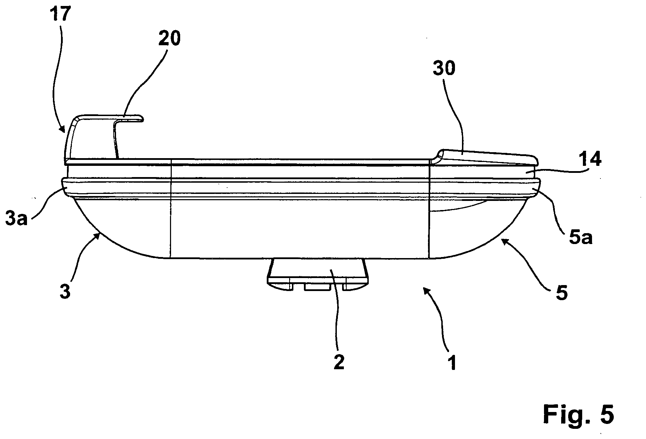

- Fig. 5: zeigt eine Seitenansicht gemäß der Linie V-V aus Fig. 4;
- Fig. 6: zeigt einen Schnitt gemäß der Linie VI-VI aus Fig. 4;
- Fig. 7: zeigt die erste obere Lautsprecherteilschale in perspektivischer Darstellung;

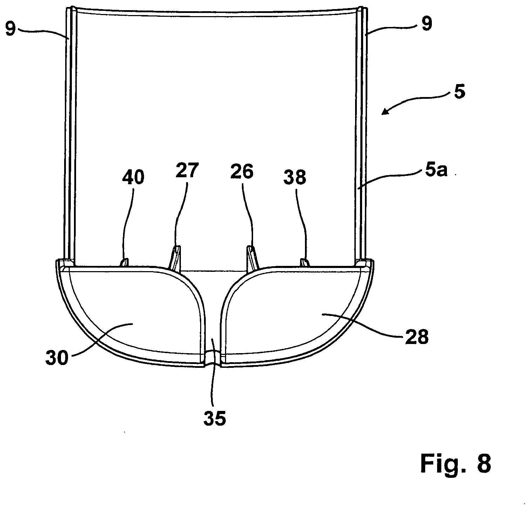

- Fig. 8: zeigt die zweite untere Lautsprecherteilschale in einer Draufsicht.

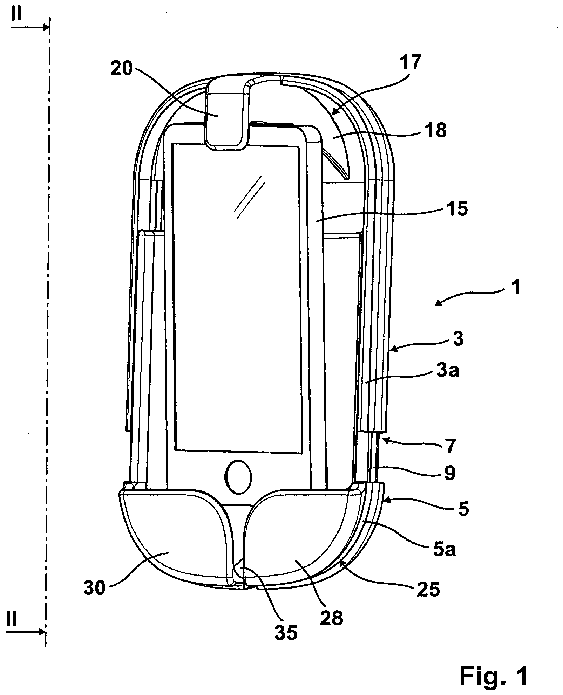

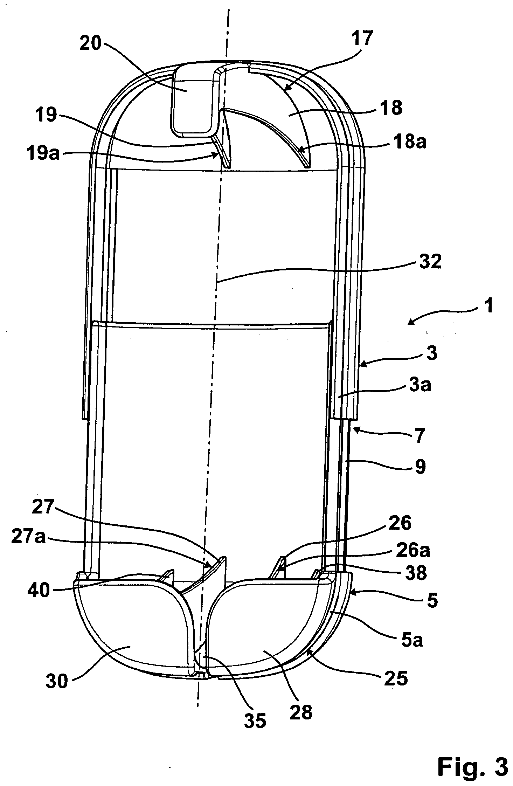

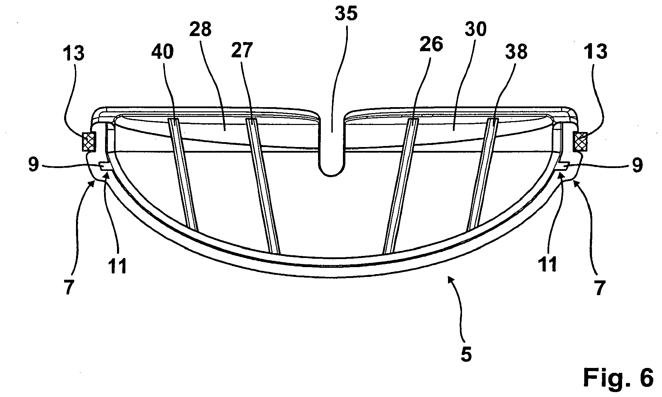

Die insgesamt mit 1 bezeichnete Lautsprecherschale umfasst die erste obere Lautsprecherteilschale 3 sowie die zweite untere Lautsprecherteilschale 5, wobei die beiden Lautsprecherteilschalen 3 und 5 teleskopierbar miteinander in Verbindung stehen. Um die erste Lautsprecherteilschale und die zweite Lautsprecherteilschale während des Teleskopiervorganges zu führen, ist eine Nut- und Federverbindung 7 vorgesehen (Fig. 6), wobei die Nut- und Federverbindung eine in der ersten Lautsprecherteilschale 3 angeordnete Feder 9 und eine in der zweiten Lautsprecherteilschale 5 angeordnete Nut 11 umfasst. Sowohl die Nut als auch die Feder erstrecken sich umlaufend im Wesentlichen über den gesamten Seitenbereich der Lautsprecherschale. Um die beiden Lautsprecherteilschalen zu verbinden, ist ein Elastomerband 13 (Fig. 6) vorgesehen, das die beiden Lautsprecherteilschalen 3 und 5 umlaufend erfasst. Hieraus wird deutlich, dass die beiden Lautsprecherteilschalen 3 und 5 gegen die Federkraft des Elastomerbandes auseinandergezogen werden, und durch die Kraft des Elastomerbandes bei aufgenommenem Handy oder Smartphone dieses sicher erfassen. Das Elastomerband ist in der umlaufenden Führungsnut 14 geführt. Um das Smartphone oder Handy, in Fig. 1 mit 15 bezeichnet, sicher zu erfassen, weist die erste obere Lautsprecherteilschale 3 den Finger 17 auf, und die untere zweite Lautsprecherteilschale 5 korrespondierend hierzu die Halteeinrichtung 25. Der Finger 17 umfasst, wie sich dies der Darstellung gemäß Fig. 3 entnehmen lässt, zwei Fingerstege 18, 19, die auf die Anschlagplatte 20 konisch zulaufend an der Lautsprecherschale angeordnet sind. Die Anschlagplatte 20 steht hierbei etwas über die beiden Fingerstege 18, 19 über, wobei somit das Gerät, z. B. das Handy 15, an der Unterseite der Anschlagplatte anliegt, wie sich dies insbesondere in Anschauung von Fig. 1 ergibt. Die beiden Fingerstege 18, 19 weisen stirnseitig jeweils eine Wölbung 18a, 19a auf, die derart ausgestaltet ist, dass das Handy oder Smartphone von allein bei Zusammenschieben der ersten und der zweiten Lautsprecherteilschale an den Wölbungen 18a, 19a entlang gleitet, bis es an der Unterseite der Anschlagplatte 20 anliegt. Wesentlich ist, dass der Finger 17 mit den Fingerstegen wesentlich über den Rand der Lautsprecherschale übersteht, also den Rand der Lautsprecherschale überragt.

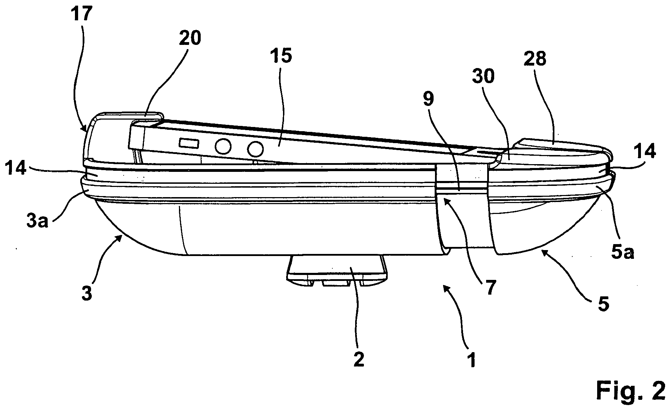

Eine ähnliche Gestaltung ergibt sich in Bezug auf die Halteeinrichtung 25 der zweiten unteren Lautsprecherteilschale 5. Dort sind zwei beabstandet zueinander angeordnete Fußstege 26, 27 vorgesehen, die ebenfalls mit einer stirnseitigen Wölbung 26a, 27a versehen sind, wobei die Wölbung (26a, 27a) ebenfalls derart gehalten ist, dass bei einsitzendem Handy und bei aufeinander Zuschieben der beiden Lautsprecherteilschalen, das Handy an den Fußstegen 26 und 27 entlang gleitet, bis es an der Unterseite der Fußplatten 28, 30 anliegt (Fig. 1, Fig. 2). Die beiden Fußplatten 28, 30 weisen in der Mittellängsachse 32 einen Schlitz 35 für das Ladekabel auf, wobei sich der Schlitz 35 bis in den Bereich der Wandung der Lautsprecherschale hineinerstreckt, wie sich dies in Anschauung von Fig. 6 ergibt.

Die beiden Fußstege 26, 27 weisen einen Abstand zueinander auf, der in etwa der Breite des Steckers des Ladekabels eines Handys oder Smartphones entspricht, sodass bei in der Lautsprecherschale einsitzendem Handy das Handy geladen werden kann. Der Schlitz 35 sorgt im Übrigen dafür, da er bis in den Bereich der Seitenwandung der Lautsprecherschale hineinragt, dass bei Regen in die Lautsprecherschale eintretendes Wasser ablaufen kann.

Die Fußplatten 28, 30 bilden den oberen Abschluss für den durch die Fußstege 26, 27 gebildeten Raum. Die Fußplatten 28, 30 liegen insofern unmittelbar auf der Wandung der Lautsprecherschale auf, d. h., sie sind mit der Lautsprecherschale in deren Randbereich verbunden.

Zu den beiden Fußstegen 26, 27 sind, wie sich dies insbesondere in Anschauung von Fig. 6 ergibt, parallel dazu verlaufende Fußlamellen 38, 40 vorgesehen, wobei die beiden Fußlamellen 38, 40 einen Abstand zu dem ersten und dem zweiten Fußsteg aufweisen, der in etwa der Breite eines Lautsprechers bzw. eines Mikrofons eines Handys bzw. eines Smartphones entspricht. Durch den Raum, der zwischen dem jeweiligen Fußsteg und der entsprechenden Fußlamelle sowie der darüber befindlichen Fußplatte gebildet wird, wird dafür gesorgt, dass der Sound zur Mitte der Lautsprecherschale hin abgestrahlt wird.

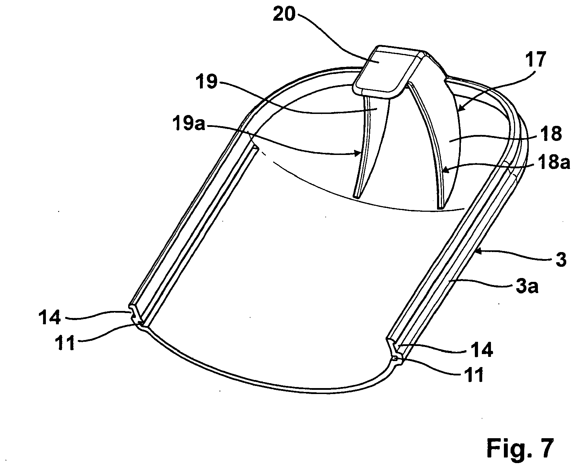

Nun ist insbesondere aus der Fig. 1 aber auch aus der Fig. 2 deutlich erkennbar, dass der Finger 17 deutlich über den Rand der Lautsprecherschale übersteht. Am zweiten unteren Ende der Lautsprecherschale befinden sich, wie bereits ausgeführt die beiden Fußplatten 28, 30. Diese liegen auf dem Rand der Lautsprecherschale auf. Das Handy oder das Smartphone liegt somit über seine Länge schräg in der Lautsprecherschale ein (Fig. 1). Hierdurch ergibt sich zwischen der rückseitigen Wandung der Lautsprecherschale einerseits und der Rückwand des Handys oder Smartphones andererseits ein trichterförmiger Raum, der für eine Verstärkung des Schalls, wie er aus dem Lautsprecher des Handys austritt, sorgt. Der Austritt des Schalls aus der Lautsprecherschale erfolgt im Wesentlichen im Seitenbereich des Handys, da die Außenkontur des Handys beabstandet zu der Seitenwandung der Lautsprecherschale verläuft. Das heißt, es besteht ein seitlicher Abstand zwischen dem Handy und der Lautsprecherschale, der dem Austritt des Schalls dient. Wie sich insbesondere aus der Darstellung gemäß Fig. 2, aber auch aus der Schnittdarstellung gemäß Fig. 6 und der Fig. 7 ergibt, ist die Lautsprecherschale bzw. sind die beiden Lautsprecherteilschalen 3 und 5 gewölbt ausgebildet. Die Wölbung erstreckt sich hierbei bis in den Bereich der Seitenwandung 3a der Lautsprecherteilschale 3 und der Seitenwandung 5a der Lautsprecherteilschale 5.

An der Rückseite der Lautsprecherschale und hier insbesondere an der oberen Lautsprecherteilschale 3 befindet sich der Adapter 2 zur Aufnahme eines Clips (nicht dargestellt) zur Verbindung z. B. mit dem Lenker eines Fahrrades. Der Adapter kann aber auch als Aufsteller oder Fuß für die Lautsprecherschale fungieren.

### Bezugszeichenliste:

- 1: Lautsprecherschale
- 2: Adapter für Clip zur Befestigung z. B. am Lenker eines Fahrrads
- 3: obere Lautsprecherteilschale
- 3a: Seitenwandung
- 5: untere Lautsprecherteilschale
- 5a: Seitenwandung
- 7: Nut- und Federverbindung
- 9: Feder
- 11: Nut
- 13: Elastomerband
- 14: Führungsnut für Elastomerband
- 15: Handy oder Smartphone
- 17: Finger
- 18, 19: Fingersteg
- 18a, 19a: Wölbung des Fingerstegs
- 20: Anschlagplatte
- 25: Halteeinrichtung
- 26, 27: Fußsteg
- 26a, 27a: Wölbung des Fußsteges
- 28, 30: Fußplatte
- 32: Mittellängsachse
- 35: Schlitz
- 38, 40: Fußlamelle

## Patentansprüche

1. Halterung zur Aufnahme eines durch einen Lautsprecher Geräusche abgebenden Gerätes, z. B. ein Handy oder Smartphone (15),
wobei die Halterung als Lautsprecherschale (1) zur rückseitigen Anordnung an dem Gerät ausgebildet ist,
wobei die Lautsprecherschale (1) seitlich über die Außenkontur des Geräts übersteht,
wobei die Lautsprecherschale zweigeteilt ausgebildet ist,
wobei die erste und die zweite Lautsprecherteilschale (3, 5) teleskopierbar miteinander in Verbindung stehen,
wobei die beiden Lautsprecherteilschalen (3, 5) Fixiermittel aufweisen, um das Geräusche abgebende Gerät in den beiden Lautsprecherteilschalen (3, 5) fixiert zu halten,
**dadurch gekennzeichnet,**
**dass** das Fixiermittel mindestens ein Elastomerband (13) umfasst,
**dass** die beiden Lautsprecherteilschalen (3, 5) umlaufend erfasst,
wobei die Lautsprecherschale (1) das Geräusche abgebende Gerät in Bezug auf die Oberseite der Lautsprecherschale schräg einliegend aufnimmt.

2. Halterung nach Anspruch 1,
**dadurch gekennzeichnet,**
**dass** die Lautsprecherschale (1) endseitig einander gegenüberliegend jeweils Mittel zur Fixierung des Geräts aufweist.

3. Halterung nach Anspruch 2,
**dadurch gekennzeichnet,**
**dass** das Mittel zur Fixierung des Geräts am oberen Ende des Geräts einen über den Rand der Lautsprecherschale (1) überstehenden Finger (17) mit einer Anschlagplatte (20) für das Gerät aufweist.

4. Halterung nach Anspruch 3,
**dadurch gekennzeichnet,**
**dass** der Finger (17) mindestens zwei konisch auf die Anschlagplatte (20) zulaufende Fingerstege (18, 19) aufweisen.

5. Halterung nach einem der Ansprüche 2 bis 4,
**dadurch gekennzeichnet,**
**dass** das Mittel zur Fixierung des Geräts am zweiten unteren Ende des Gerätes eine Halteeinrichtung (25) umfasst.

6. Halterung nach Anspruch 5,
**dadurch gekennzeichnet,**
**dass** die Halteeinrichtung (25) mindestens einen ersten und einen zweiten Fußsteg (26, 27) umfasst, sowie zwei Fußplatten (28, 30), die parallel zur Mittellängsachse (32) unter Bildung eines Schlitzes (35) beabstandet zueinander verlaufen, wobei an der Unterseite der Fußplatten (28, 30) das Gerät bei Aufnahme durch die Lautsprecherschale (1) anliegt.

7. Halterung nach Anspruch 6,
**dadurch gekennzeichnet,**
**dass** der Schlitz (35) sich bis in die Seitenwandung der Lautsprecherschale (1) erstreckt.

8. Halterung nach einem der Ansprüche 6 und 7,
**dadurch gekennzeichnet,**
**dass** die Fingerstege (18, 19) in Richtung auf die Anschlagplatte (20) und die Fußstege (26, 27) in Richtung auf die Halteeinrichtung (25) jeweils eine Wölbung (18a, 19a; 26a, 27a) derart aufweisen, dass das Gerät an der Anschlagplatte (20) und den Fußplatten (28, 30) anliegt.

9. Halterung nach einem der Ansprüche 6 bis 8,
**dadurch gekennzeichnet,**
**dass** der erste und der zweite Fußsteg (26, 27) auf die Rückseite der Lautsprecherschale (1) konisch zulaufend an der Lautsprecherschale (1) angeordnet sind, wobei neben dem jeweiligen Fußsteg (26, 27) unter Bildung eines Abstandes parallel dazu verlaufend jeweils mindestens eine Fußlamelle (38, 40) angeordnet ist.

10. Halterung nach einem der voranstehenden Ansprüche, **dadurch gekennzeichnet,**
**dass** das Elastomerband (13) in einer Führungsnut (14) der Lautsprecherteilschalen (3, 5) einliegt.

11. Halterung nach einem der einem der voranstehenden Ansprüche, **dadurch gekennzeichnet,**
**dass** die beiden Lautsprecherteilschalen (3, 5) durch eine Nut- und Federverbindung (7) geführt miteinander in Verbindung stehen.

12. Halterung nach einem der voranstehenden Ansprüche,
**dadurch gekennzeichnet,**
**dass** die Lautsprecherteilschale (3, 5) im Übergang zur Seitenwand (3a, 5a) gewölbt ausgebildet ist.

## Claims

1. A holder for receiving a device issuing sounds from a loudspeaker, e.g. a mobile phone or a smartphone (15),
wherein the holder is designed as a loudspeaker shell (1) to be disposed at the rear of the device,
wherein the loudspeaker shell (1) protrudes laterally from the outer contour of the device,
wherein the loudspeaker shell is split into two parts,
wherein the first and the second loudspeaker shell parts (3, 5) are telescopically connected to each other,
wherein the two loudspeaker shell parts (3, 5) have fastening means for holding the device issuing sounds in a fixed manner in the two loudspeaker shell parts (3, 5),
**characterized in that**
the fastening means comprises at least one elastomeric band (13), which circumferentially grips the two loudspeaker shell parts (3, 5), wherein the loudspeaker shell (1) receives the device issuing sounds in such manner that it is set obliquely relative to the upper side of the loudspeaker shell.

2. The holder according to claim 1,
**characterized in that**
at its ends, the loudspeaker shell (1) respectively comprises oppositely arranged means for fastening the device.

3. The holder according to claim 2,
**characterized in that**
at the upper end of the device, the means for fastening the device features a finger (17) with a limit plate (20) for the device protruding from the edge of the loudspeaker shell (1).

4. The holder according to claim 3,
**characterized in that**
the finger (17) features at least two finger webs (18, 19) extending conically toward the limit plate (20);

5. The holder according to one of the claims 2 to 4,
**characterized in that**
the means for fastening the device comprises a holding device (25) at the second bottom end of the device.

6. The holder according to claim 5,
**characterized in that**
the holding device (25) comprises at least one first and one second base webs (26, 27) as well as two base plates (28, 30), which extend at a distance from each other, parallel to the centre longitudinal axis (32), thus forming a slot (35), wherein when it is received by the loudspeaker shell (1), the device rests on the bottom side of the base plates (28, 30).

7. The holder according to claim 6,
**characterized in that**
the slot (35) extends into the lateral wall of the loudspeaker shell (1).

8. The holder according to one of the claims 6 and 7,
**characterized in that**
the finger webs (18, 19) and the base webs (26, 27) respectively feature a curvature (18a, 19a; 26a, 27a) in the direction of the limit plate (20) and in the direction of the holding device (25), so that the device rests on the limit plate (20) and the base plates (28, 30).

9. The holder according to one of the claims 6 to 8,
**characterized in that**
the first and the second base web (26, 27) are disposed at the loudspeaker shell (1) so that they conically extend toward the rear side of the loudspeaker shell (1), wherein at least one base lamella (38, 40) is disposed next to the respective base web (26, 27) so that it extends parallel to it while forming a gap.

10. The holder according to one of the afore-mentioned claims,
**characterized in that**
the elastomeric band (13) is set in a guide groove (14) of the loudspeaker shell parts (3, 5).

11. The holder according to one of the afore-mentioned claims,
**characterized in that**
the two loudspeaker shell parts (3, 5) are connected to each other in such a manner that they are guided by a groove and spring connection (7).

12. The holder according to one of the afore-mentioned claims,
**characterized in that**
the loudspeaker shell parts (3, 5) are formed in a curved manner in the transition to the lateral wall (3a, 5a).

## Revendications

1. Support pour recevoir un appareil émettant des sons via un haut-parleur, par exemple un téléphone portable ou un smartphone (15), où le support prends la forme d'une coque de haut-parleur (1) destinée à être disposée à l'arrière de l'appareil,
où la coque de haut-parleur (1) dépasse latéralement du contour extérieur de l'appareil,
où la coque de haut-parleur est formée de manière scindée,
où la première et la seconde partie de coque de haut-parleur (3, 5) sont reliées de manière télescopique,
où les deux parties de coque de haut-parleur (3, 5) comprennent des moyens de fixation pour maintenir l'appareil émettant des sons de manière fixe dans les deux parties de coque de haut-parleur (3, 5),
**caractérisé en ce que**
le moyen de fixation comprend au moins une bande élastomère (13) qui saisit les deux parties de coque de haut-parleur (3, 5) sur leur pourtour, où la coque de haut-parleur (1) reçoit l'appareil émettant des sons de telle manière qu'il y repose de manière oblique par rapport au côté supérieur de la coque de haut-parleur.

2. Support selon la revendication 1,
**caractérisé en ce que**
la coque de haut-parleur (1) comprend à ses extrémités des moyens respectifs de fixation de l'appareil opposés les uns aux autres.

3. Support selon la revendication 2,
**caractérisé en ce que**
le moyen de fixation de l'appareil à l'extrémité supérieure de l'appareil comprend un doigt (17) avec une plaque de butée (20) pour l'appareil qui dépasse du bord de la coque de haut-parleur (1).

4. Support selon la revendication 3,
**caractérisé en ce que**
le doigt (17) comprend au moins deux traverses de doigt (18, 19) s'étendant de manière conique vers la plaque de butée (20).

5. Support selon l'une des revendications 2 à 4,
**caractérisé en ce que**
le moyen de fixation de l'appareil comprend un dispositif de support (25) à sa seconde extrémité inférieure.

6. Support selon la revendication 5,
**caractérisé en ce que**
le dispositif de support (25) comprend au moins une première et une deuxième traverse d'assise (26, 27) ainsi que deux plaques d'assise (28, 30) qui s'étendent à distance l'une de l'autre parallèlement à l'axe longitudinal central (32) en formant une fente (35), où l'appareil repose sur le côté inférieur des plaques d'assise (28, 30) lorsqu'il est reçu par la coque de haut-parleur (1).

7. Support selon la revendication 6,
**caractérisé en ce que**
la fente (35) s'étend jusque dans la paroi latérale de la coque de haut-parleur (1).

8. Support selon l'une des revendications 6 et 7,
**caractérisé en ce que**
les traverses de doigt (18, 19) et les traverses d'assise (26, 27) présentent respectivement une courbure (18a, 19a) dans la direction de la plaque de butée (20) et une courbure (26a, 27a) dans la direction du dispositif de support (25), de sorte que l'appareil repose sur la plaque de butée (20) et sur les plaques d'assise (28, 30).

9. Support selon l'une des revendications 6 à 8,
**caractérisé en ce que**
la première et la seconde traverse d'assise (26, 27) sont disposées au niveau de la coque de haut-parleur (1) de manière à s'étendre sous forme conique en direction du côté arrière de la coque de haut-parleur (1), où respectivement au moins une lamelle d'assise (38, 40) est disposée à côté de la traverse d'assise (26, 27) respective de manière à s'étendre parallèlement à celle-ci en formant un écartement.

10. Support selon l'une des revendications précédentes,
**caractérisé en ce que**
la bande élastomère (13) repose dans une rainure de guidage (14) des parties de coque de haut-parleur (3, 5).

11. Support selon l'une des revendications précédentes,
**caractérisé en ce que**
les deux parties de coque de haut-parleur (3, 5) sont reliées l'une à l'autre de telle manière qu'elles sont guidées par un assemblage à rainure et ressort (7).

12. Support selon l'une des revendications précédentes,
**caractérisé en ce que**
la partie de coque de haut-parleur (3, 5) est formée de manière courbée au niveau de la transition vers la paroi latérale (3a, 5a).
